# EUROPEAN PATENT APPLICATION

(11) **EP 4 299 897 A1**
(43) Date of publication of application: **03.01.2024**
(21) Application number: 22382609.0
(22) Date of filing: 29.06.2022
(51) Int. Cl.: F03B 13/26, F03B 17/06

(54) **SYSTEM AND METHOD FOR PRODUCING ELECTRICITY FROM A FLUID STREAM IN A BODY OF WATER**

(71) Applicant: Relidal, SL, 28003 Madrid (ES)
(72) Inventor: TARAZONA LIZARRAGA, Jaime, 28400 Collado Villalba (ES); CALVO SANTESMASES, Manuel, 28003 Madrid (ES); LÓPEZ-PEÑA FERNÁNDEZ, Álvaro, 28023 Madrid (ES)
(74) Representative: Torner, Juncosa I Associats, SL

(57) **Abstract**

The present invention relates to a system for producing electricity from a fluid stream in a body of water comprising at least one floating vessel (1) which comprises: at least one hull (10); at least one foil for propelling the floating vessel; at least one underwater turbine (30) operatively connected to at least one electrical generator for producing electricity; wherein the system further comprises at least one guide cable (40) connected to the at least one floating vessel (1) for guiding said at least one floating vessel (1) along a path; and wherein said at least one foil is an underwater hydrofoil (20) for propelling the at least one floating vessel (1) along the path defined by the at least one guide cable (40).

The present invention also relates to a method for producing electricity from a fluid stream in a body of water.

## Description

### Technical field

The present invention relates to a power generating system and method. In particular, the present invention relates to a system and to a method for producing electricity from a fluid stream in a body of water.

### State of the Art

Renewable energy sources are becoming more important and necessary as the need for reducing the consumption of fossil energy sources increases, among other reasons. Renewable energy includes sources such as solar, wind, hydropower, bioenergy, tides, waves and geothermal heat. The present invention is particularly related to tidal power or tidal electricity generation.

Gravitational pull of the moon and sun along with the rotation of the earth create tides in oceans, seas, lakes, etc. Said tides can be used for producing electricity. Although not yet widely used, especially compared with solar, wind or hydropower renewable energy sources, tidal energy has a great potential for energy generation. A key advantage is that tides are more predictable than wind and solar, easing its integration in power systems. Another advantage of tidal over other sources of renewable energy is that it is placed on the sea, where space is large and, if placed following strict environmental and social criteria, less land constrains, smaller visual impacts and reduced social opposition may exist.

A tidal generator converts the energy of tidal flows into electricity. High tidal current velocities increase the potential for tidal generation.

Typically, known tidal power generators include tidal barrages, tidal turbines and tidal fences. The present invention is particularly related to tidal turbines, which make use of the kinetic energy of moving water to power turbines. Tidal turbines are like wind turbines in that they both have blades that turn a rotor to power a generator. Known in the art there are tidal turbines which are placed on the sea floor in locations where there is a strong tidal flow. For example, EP 2425122 A1 and EP 2122160 A1 disclose tidal turbines for being placed on the sea floor.

Also known in the art there are tidal turbines which are placed on floating devices close to the water surface as, typically, tidal flow is stronger closer to the water surface than on the sea floor. For example, EP 1831544 A1, EP 3851665 A1 and WO 2022/106832 A1 disclose tidal turbines placed on floating devices near the water surface. In any case, energy production from tidal turbines placed on the sea floor or on a floating device depend on the velocity of tidal flow on the location where the tidal turbines are placed, which vary from place to place. Typically, tidal turbines are placed on locations having fast tidal currents.

Known in the art there are systems and methods for producing electricity from a fluid stream in a body of water, in particular, which disclose attaching a tidal turbine to the hull of a vessel, such as a ship or a boat.

US 7146918 B2 discloses a system for producing hydrogen comprising a plurality of sail driven vessels floating in water and coupled to each other in a predetermined spaced apart configuration to form a convoy, each of said vessels comprising: at least one sail for capturing wind to move the vessel reciprocally substantially along a predetermined path which is substantially perpendicular to the wind direction; at least one turbine provided below each said vessel so as to be submerged in the water and rotated by water flowing therethrough when the floating vessels are moved relative to the water by the at least one sail; a generator adapted for converting rotation of the at least one turbine into electricity; and an onboard hydrogen production system to produce hydrogen using the electricity generated by the generator.

A problem of the system disclosed by US 7146918 B2 is the large size of the vessel, which is described as being preferably about 250 meters, and its sails, which are described as being about 100 meters. Such large vessel and sails create a remarkable visual impact, as well as disturbance to the marine and aerial ecosystem.

WO 2016/142566 A1 relates to a system for the production of hydrogen from sea water, of the type that comprises a boat fitted with sails for capturing the wind to move the ship; at least one turbine placed under the ship in order to stay submerged in the water and its rotation is caused by water flowing through turbine when the ship moves in the water; an electric generator adapted to convert the rotation of at least one of the turbines into electricity; a system for generating hydrogen from the electric energy generated; and hydrogen storage means.

The sails of the boat disclosed by WO 2016/142566 A1 have a configurable profile between a folded non-operational position, and an unfolded operational position, which determines the sail profile and hence the aerodynamic surface that makes contact with the wind.

A further problem of the system disclosed by US 7146918 B2 is that the sails are difficult to operate, control and regulate. WO 2016/142566 A1 aims to solve this problem. However, WO 2016/142566 A1 does not solve the problem of the large size of the vessel and sails and also suffers such problems.

The systems disclosed by US 7146918 B2 and WO 2016/142566 A1 also suffer from the limited energy production due to the difference of densities between water, which drives the turbine, and air, which propels the vessel via the sail. In particular, wind interacting with sails generates a propulsion force which propels the sailboat. Water flowing through the turbine, to rotate its blades and generate electricity, produces a drag force that slows the sailboat down. As there is a big difference between the water and air density, and as the propulsion force must be greater than the drag force in order to the sailboat to move forward, the surface of the sails must be much bigger than the swept area of the turbine and, consequently, limit the energy produced by the turbine, which is proportional to its swept area, as the sail surface cannot grow indefinitely.

### Brief description of the invention

The present invention aims to overcome the aforementioned drawbacks of the prior art by disclosing, according to a first aspect, a system for producing electricity from a fluid stream in a body of water comprising at least one floating vessel which comprises: at least one hull; at least one foil for propelling the floating vessel; at least one underwater turbine operatively connected to at least one electrical generator for producing electricity; wherein the system further comprises at least one guide cable connected to the at least one floating vessel for guiding said at least one floating vessel along a path; and wherein said at least one foil is an underwater hydrofoil for propelling the at least one floating vessel along the path defined by the at least one guide cable.

Besides overcoming the aforementioned drawbacks of the prior art, the present invention provides further innovations and benefits, which will be detailed hereinbelow.

An advantage of the present invention when compared to other tidal based energy production devices known in the art is that it can be deployed in areas with slow or weak tidal currents, thereby increasing the number of feasible possibilities for its location. Known in the art tidal based energy production devices are typically placed in areas having fast or strong tidal currents, thus limiting the number of feasible locations.

Electricity produced by the system object of the first aspect of the present invention can be, for example, stored in accumulators, transferred to an electrical network or final user or transformed into another suitable energy vector, for example, hydrogen, ammonia, etc.

The present invention is preferably configured for producing electricity from a fluid stream from an ocean, a sea or a lake, although any other suitable body of water can also be used.

Power generated by a turbine is proportional to the density of the fluid. Therefore, when compared to a wind turbine, the system of the present invention can produce more energy as the density of water is much greater than the density of air (roughly 800 times greater).

Power generated by a turbine is proportional to the fluid speed cubed, so that small increments in the fluid speed produce huge increments in power output of a turbine.

According to the first aspect of the present invention, the at least one underwater turbine may be arranged so that apparent speed of the fluid stream drives it.

Apparent speed of the tide is the result of the vector sum of the tide real speed and of the tide relative speed due to the movement of the at least one floating vessel.

Consequently, when compared with other known tidal based electricity production systems which are only driven by the tide real speed as said known systems are stationary, the system object of the present invention is able to have a greater power, i.e. is able to produce more electricity, as, due to the movement of the at least one floating vessel, it is the apparent speed of the tide the one driving the at least one underwater turbine, thereby greatly increasing the power generated by the at least one underwater turbine of the system according to the present invention as power generated by a turbine is proportional to the fluid speed cubed. When compared to systems as the ones disclosed in the known prior art, such as the ones of US 7146918 B2 and WO 2016/142566 A1, the propulsion force generated by the apparent speed of the fluid interacting with the at least one underwater hydrofoil of the at least one floating vessel of the present invention is increased per surface unit of said foil, thereby the relation between foil and turbine dimensions is optimised. Said better proportion is due to the fact that in the present invention the fluid propelling the vessel and the fluid flowing through the turbine is the same, and, thus, have the same density, whereas in the systems disclosed by US 7146918 B2 and WO 2016/142566 A1 the vessel is propelled by air and the turbine is driven by water, density of water being roughly 800 times greater than the one of air. Said optimisation of the relation between surface of the foil, underwater hydrofoil in the case of the present invention, and surface of the turbine, allows for a reduction of the surface of the foil for a given surface of the turbine or for an increased surface of the turbine, which results in an increased power, for a given surface of the foil.

Moreover, compared with systems propelled by wind as the ones disclosed by US 7146918 B2 and WO 2016/142566 A1, tides are more stable and predictable than wind, and consequently, a tidal powered electricity production system as the one of the present invention is easier to integrate in the electricity market.

As stated hereinabove, the density of water is approximately 800 times greater than the one of air. Due to this difference between air and water densities, systems as the ones disclosed in US 7146918 B2 and WO 2016/142566 A1 balance lateral forces to maintain a certain heading with the aid of the keel that minimizes lateral motion, i.e. drift, of the vessel under sail, i.e. leeway, and that acts as a counterweight to the lateral force of the wind on the sail(s) that causes rolling to the side, i.e. heeling. As in the present invention the same fluid is used to propel the at least one floating vessel and to drive the at least one underwater turbine, drift of the at least one floating vessel cannot be compensated with a keel or luff. The at least one guide cable compensates the drift of the at least one floating vessel and guides it along a path defined by the at least one guide cable. In this way, an overall balance of forces of the system is achieved, with the at least one floating vessel advancing at a certain speed that generates a certain nominal apparent velocity of the fluid, which both propels the sail and drives the turbine from which the system generates electricity.

According to a first aspect of the present invention, the at least one floating vessel may be slidably connected to at least one guide cable.

According to the first aspect of the present invention, the system may comprise at least one traveller slidably connected to the at least one guide cable, said traveller being connected to the corresponding floating vessel. Alternatively, the at least one hull may be directly connected in a slidable manner to the at least one guide cable.

According to the first aspect of the present invention, the traveller may be connected to the corresponding floating vessel by a bridle cable. Among other benefits, this allows the at least one guide cable to be at a homogeneous depth.

According to the first aspect of the present invention, the path defined by the at least one guide cable may be a closed loop path; and the system may further comprise at least two nodes for shaping said closed loop path; the at least one floating vessel being firmly attached to said at least one guide cable, so that the at least one floating vessel propelled by its at least one underwater hydrofoil drives the at least one guide cable along the closed loop path. In such embodiment, the at least one floating vessel is not pulled by the at least one guide cable, neither does the guide cable drive a generator, as for example, in EP 3253964 A1 or NO 345747. In such embodiment, the at last one guide cable guides the at least one floating vessel along a path and compensates the drift of the at least one floating vessel.

According to the first aspect of the present invention, the path defined by the at least one guide cable may have a first and a second end defining a length of the path; the length of the at least one guide cable being greater than said length of the path; and the system may further comprise a tensioning unit at least at the first and second ends of the path for tensioning the at least one guide cable; the at least one floating vessel being firmly attached to said at least one guide cable, so that the at least one floating vessel propelled by its at least one underwater hydrofoil drives the at least one guide cable along the path. In such embodiment, the at last one guide cable guides the at least one floating vessel along a path and compensates the drift of the at least one floating vessel. The at least one guide cable does not pull the at least one floating vessel. Preferably, the tensioning unit may comprise a winding unit for winding and/or unwinding the at least one guide cable extending from the corresponding first or second end of the path.

According to the first aspect of the present invention, the system may further comprise a mooring unit for mooring said at least one guide cable. Preferably, said mooring unit is a floating mooring unit. Alternatively, the mooring unit is anchored to the bed of the body of water, in which case the mooring unit can be preferably configured to rest on the bed of the body of water. In certain embodiments of the present invention, part of the mooring unit may be a floating mooring unit and part may be anchored to the bed of the body of water.

According to the first aspect of the present invention, the system may comprise a plurality of floating vessels arranged in a spaced apart configuration for forming a convoy. The distance between floating vessels may be uniform or may be different one another. Preferably, the distance between floating vessels is such that turbulences created by previous vessels does not reach succeeding ones, in order to optimize performance of the system, and in particular, in order to optimize its energy production.

According to the first aspect of the present invention, the at least one floating vessel may comprise two or more hulls. Preferably, each hull comprises at least one underwater turbine. Preferably, the distance between contiguous adjacent hulls is such that turbulences created by the at least one underwater turbine and/or the at least one underwater hydrofoil do not affect each other.

According to the first aspect of the present invention, the two or more hulls are interconnected by a connecting structure. Preferably, the connecting structure is configured to be above water line. This configuration has the advantage that the connecting structure does not add hydrodynamic drag to the floating vessel. Despite this, in some embodiments the connecting structure can be configured to be below water line or on the water line.

According to the first aspect of the present invention, the connecting structure may be of a substantially circular shape. However, it could have any other shape. Said connecting structure is preferably shaped as to reduce the hydrodynamic and/or aerodynamic drag of the at least one floating vessel, while optimising the strength, cost and performance of the structure.

According to the first aspect of the present invention, the at least one floating vessel may further comprise at least one reinforcing element interconnecting the at least one underwater hydrofoil with the connecting structure. Said at least one reinforcing element can increase the stiffness and structural integrity of the at least one underwater hydrofoil.

According to the first aspect of the present invention, the at least one underwater hydrofoil may be made of at least two parts joined together in an articulated manner by an articulated connexion, so that the at least one underwater hydrofoil can change its shape and, thereby, change its hydrodynamic properties, for example, lift or drag.

According to the first aspect of the present invention, the at least one articulated connexion may be connected to the connecting structure by at least one reinforcing element. Preferably, the at least one reinforcing element is placed above waterline. Alternatively, the at least one reinforcing element can be placed below or on waterline.

According to the first aspect of the present invention, the at least one underwater hydrofoil may be made of at least two parts joined together in an extensible and contractable manner, so that the area of said at least one underwater hydrofoil may be extended or reduced in order to adjust its hydrodynamic properties to the needs of the corresponding vessel and the system of the present invention. Alternatively, the vessel could comprise means to adjust the penetration of the at least one underwater hydrofoil in the water, that is to say, means to partially insert or remove the at least one underwater hydrofoil from water, so that the submerged surface of the hydrofoil varies.

According to the first aspect of the present invention, said at least one underwater hydrofoil may comprise a plurality of ribs surrounded by a skin defining the external surface of said at least one underwater hydrofoil. Preferably, said at least one underwater hydrofoil further comprises stringers interconnecting the plurality of ribs.

According to the first aspect of the present invention, the at least one underwater hydrofoil may comprise a group of at least two underwater hydrofoil segments, each segment being slidably connected to reinforcing elements operatively connected to the connecting structure, said group being configured to act as a single underwater hydrofoil. Preferably each underwater hydrofoil segment is rigid or at least substantially rigid. Even though each group of underwater hydrofoil segments function as a single underwater hydrofoil, there may be a gap between adjacent hydrofoil segments that under certain conditions can produce a channel effect that enhances hydrodynamic properties of the group of underwater hydrofoil segments acting as a single underwater hydrofoil.

According to the first aspect of the present invention, each underwater hydrofoil segment may comprise a plurality of ribs surrounded by a skin defining the external surface of said underwater hydrofoil segment. Preferably, each underwater hydrofoil segment further comprises stringers interconnecting the plurality of ribs.

According to the first aspect of the present invention, the at least one underwater hydrofoil may be arranged in an adjustable angular position manner, that is to say, the at least one underwater hydrofoil is arranged so that its angular position can be adjusted, i.e., the at least one underwater hydrofoil can be rotated around a rotation axis, so that it can be oriented to the apparent fluid speed with a determined attack angle.

According to the first aspect of the present invention, the at least one turbine may be a horizontal axis water turbine.

According to the first aspect of the present invention, the at least one turbine may be a vertical axis water turbine.

Embodiments of the first aspect of the present invention comprising a vessel having two or more water turbines could comprise at least one horizontal axis water turbine and at least one vertical axis water turbine.

According to the first aspect of the present invention, the angular position of the at least one turbine may be adjustable. This allows the at least turbine to be oriented so that the apparent speed of the fluid drives it and maximizes its energy production.

According to the first aspect of the present invention, the at least one turbine may comprise at least two blades.

According to the first aspect of the present invention, the at least one floating vessel may comprise at least one support structure of the at least one underwater turbine, said support structure being preferably connected to the vessel in an articulated manner. Preferably, said support structure is movable from a deployed position in which the underwater turbine is fully submerged and a resting position in which at least part of the underwater turbine projects above the water surface. Said support structure may be moved to the resting position, for example, when there is a storm or strong tides that could damage the at least one underwater turbine or when maintenance operations need to be performed.

According to the first aspect of the present invention, the at least one floating vessel may comprise one support structure for each hull thereof, each support structure comprising at least one underwater turbine.

According to the first aspect of the present invention, the system may comprise two guide cables, each one arranged on opposite sides of the at least one floating vessel.

According to the first aspect of the present invention, the at least one floating vessel may further comprise at least one accumulator for storing the electricity produced by the at least one generator. In embodiments having more than one vessel, it is possible that only a certain number of the vessels comprise said accumulator and, for example, the vessels lacking an accumulator can be electrically connected to another vessel having an accumulator. It is also possible that all vessels comprise such accumulator. Preferably, said at least one accumulator is at least one battery.

According to the first aspect of the present invention, the at least one floating vessel may further comprise an onboard hydrogen production system to produce hydrogen or a similar energy vector, such as ammonia, using electricity produced by the at least one generator, and at least one storage container for storing hydrogen or any other suitable energy vector produced by the production system. In embodiments having more than one vessel, it is possible that only a certain number of the vessels can comprise said onboard hydrogen, or any other energy vector, production system. It is also possible that all vessels comprise such system. Hydrogen, or any other suitable energy vector, stored on the at least one storage container may be transferred to land or shore once the at least one floating vessel reaches the end of the guide cable, wherein a transfer station may be installed.

According to the first aspect of the present invention, the system may comprise an electrical connection to an external electrical network or to an external consumer.

According to the first aspect of the present invention, the at least one floating vessel may comprise an electrical connection to an external electrical network or to an external consumer. In embodiments having more than one floating vessel, that is to say, in embodiments having a convoy of floating vessels, preferably only the first or last vessel comprise said electrical connection to an external electrical network or to an external consumer, the other members of the convoy being electrically connected to such vessel having said external electrical connection. Preferably, the external electrical network is a distribution or a transmission electrical network.

According to the first aspect of the present invention, said electrical connection to an external electrical network or to an external consumer may comprise at least one electric cable and the at least one floating vessel may further include a bobbin for rolling and unrolling said at least one electric cable.

According to the first aspect of the present invention, the rolled electric cable may be configured to rest on the at least one guide cable.

According to the first aspect of the present invention, the guide cable may also be configured to transmit electrical power, so that the same cable guides the at least one floating vessel and transmits electrical power to a further floating vessel and/or to an external electrical network or to an external consumer.

According to the first aspect of the present invention, an electrical substation may be provided at at least one of the ends of the guide cable.

In embodiments of the present invention having one or more vessels comprising at least one accumulator for storing electricity, the electricity stored may be transferred to an external electrical network or to an external consumer when the vessel reaches the end of the guide cable, which may be provided with a connection to said external electrical network or consumer.

According to the first aspect of the present invention, the at least one floating vessel may further comprise at least one motor operatively connected to at least one propeller. Said motor is preferably powered with the power generated by the corresponding at least one turbine.

According to a second aspect of the present invention, it is also disclosed a method for producing electricity from a fluid stream in a body of water comprising the following steps:
- providing a system according to the first aspect of the present invention;
- moving the at least one floating vessel along the at least one guide cable following a first advance direction; and
- generating electricity with the at least one underwater turbine of the at least one floating vessel.

Electricity produced by the method object of the second aspect of the present invention can be, for example, stored in accumulators, transferred to an electrical network or final user, transformed into another energy vector, for example, hydrogen or ammonia, etc.

According to the second aspect of the present invention, the method may further comprise the step of adjusting the angular position of the at least one turbine to maximize its energy production. Preferably, the angular position of the at least one turbine is adjusted so that apparent speed of the fluid stream drives it.

According to the second aspect of the present invention, the method may further comprise the step of adjusting the angular position of the at least one underwater hydrofoil of the at least one floating vessel. The at least one hydrofoil may be oriented with a certain angle of attack towards the relative tide to optimize its lift coefficient. Alternatively, the lift/drag coefficient may be changed by changing the angle of attack of the at least one hydrofoil. Braking the at least one floating vessel may be desired when reaching the end of the path, in case of a storm, in case of breakdown, for maintenance, etc.. Moreover, the angular position of the at least one hydrofoil may also be adjusted when it is desired to reverse the advance direction of the at least one vessel, or when direction of tidal currents changes.

In the case of a storm or maintenance, it is preferred that the at least one floating vessel rests static, in which case the at least one hydrofoil can be oriented parallel to the real tide, that is to say, the at least one hydrofoil may be heaving to, in order to reduce the lift / drag coefficient thereof.

According to the second aspect of the present invention, the method may further comprise the step of moving the at least one floating vessel along the path defined by the at least one guide cable following a second advance direction, said second advance direction being opposite the first one. Preferably, the at least one floating vessel changes its advance direction once it reaches an end of the path defined by the at least one guide cable.

According to the second aspect of the present invention, the method may further comprise the step of turning on the at least one motor operatively connected to at least one propeller for accelerating the at least one floating vessel after it changes its advance direction. Preferably, the method further comprises the step of turning off the at least one motor once the at least one floating vessel reaches a certain speed.

According to the second aspect of the present invention, the method may comprise the step of propelling the at least one floating vessel with the at least one motor. However, this should preferably be used only when conditions of weather, tide, waves, etc. are adverse and do not allow operation of the system without the use of mechanical or additional propulsion.

According to the second aspect of the present invention, the method may further comprise the step of adjusting the shape of the at least one underwater hydrofoil of the at least one floating vessel to increase its hydrodynamic lift coefficient.

According to the second aspect of the present invention, the method may further comprise the step of adjusting the surface of the at least one hydrofoil in contact with the body of water. This can be done, for example, by increasing or decreasing the overall surface of the at least one hydrofoil; by increasing or reducing the penetration of the at least one hydrofoil in the body of water, etc. This allows to adjust the propulsion force of the at least one vessel and, therefore, the advance speed thereof, which results in an adjustment of the apparent speed of the fluid stream in a body of water and, consequently, in an adjustment of the power generated by the at least one underwater turbine, as its energy production is proportional to the fluid speed cubed.

It will be understood that, unless otherwise provided, features described as being part of the first aspect of the present invention can also be applied to the second aspect of the present invention, and vice versa.

It will be understood that references to geometric position, such as parallel, perpendicular, tangent, etc. allow deviations up to ± 5° from the theoretical position defined by this nomenclature.

It will also be understood that any range of values given may not be optimal in extreme values and may require adaptations of the invention to these extreme values are applicable, such adaptations being within reach of a skilled person.

Other features of the invention appear from the following detailed description of an embodiment.

### Brief description of the Figures

The foregoing and other advantages and features will be more fully understood from the following detailed description of an embodiment with reference to the accompanying drawings, to be taken in an illustrative and non-limitative manner, in which:
FIG. 1 shows a top schematic view of a first exemplary embodiment of a system for producing electricity from a fluid stream in a body of water according to the present invention.
FIG. 2 shows a bottom perspective view of a first exemplary embodiment of a floating vessel of a system for producing electricity according to the present invention.
FIG. 3 shows a top view of the first exemplary embodiment of a floating vessel shown in FIG. 2.
FIG. 4 shows a front view of a second exemplary embodiment of a floating vessel of a system for producing electricity according to the present invention.
FIG. 5 shows a top perspective view of the second exemplary embodiment of a floating vessel shown in FIG. 4.
FIG. 6 shows different adjustments of the underwater hydrofoil and the support structures of corresponding underwater turbines of the second exemplary embodiment of a floating vessel shown in FIGS. 4 and 5.
FIG. 7 shows different angular positions of the underwater turbines and the underwater hydrofoil of the second exemplary embodiment of a floating vessel shown in FIGS. 4 to 6.
FIG. 8 shows a bottom perspective view of a third exemplary embodiment of a floating vessel of a system for producing electricity according to the present invention.
FIG. 9 shows a top view of the third exemplary embodiment of a floating vessel shown in FIG. 8.
FIG. 10 shows a bottom perspective view of a fourth exemplary embodiment of a floating vessel of a system for producing electricity according to the present invention.
FIG. 11 shows a top view of the fourth exemplary embodiment of a floating vessel shown in FIG. 10.
FIG. 12 shows a bottom perspective view of a fifth exemplary embodiment of a floating vessel of a system for producing electricity according to the present invention.
FIG. 13 shows in a top view a first configuration of the fifth exemplary embodiment of a floating vessel shown in FIG. 12.
FIG. 14 shows in a top view a second configuration of the fifth exemplary embodiment of a floating vessel shown in FIGS. 12 and 13.
FIG. 15 shows in a top view a third configuration of the fifth exemplary embodiment of a floating vessel shown in FIGS. 12 to 14.
FIG. 16 shows a top schematic view of a second exemplary embodiment of a system for producing electricity according to the present invention.
FIG. 17 shows a top schematic view of a third exemplary embodiment of a system for producing electricity according to the present invention.
FIG. 18 shows a top schematic view of a fourth exemplary embodiment of a system for producing electricity according to the present invention.
FIG. 19 shows a top schematic view of a fifth exemplary embodiment of a system for producing electricity according to the present invention.

### Detailed description of an embodiment

The foregoing and other advantages and features will be more fully understood from the following detailed description of an embodiment with reference to the accompanying drawings, to be taken in an illustrative and not limitative way.

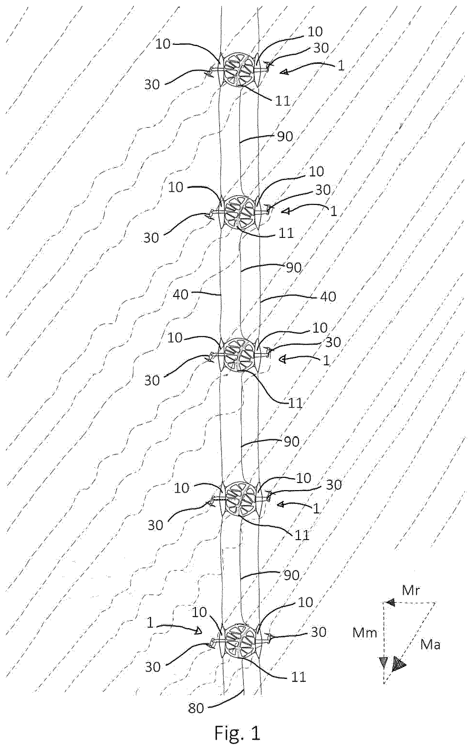

A top schematic view of a first exemplary embodiment of a system for producing electricity from a fluid stream in a body of water according to the present invention can be seen in FIG. 1. The exemplary embodiment shown comprises five floating vessels 1 arranged in a spaced apart configuration and forming a convoy. However, other embodiments of the present invention may comprise a different number of floating vessels 1. In particular, one floating vessel 1 would suffice, although a plurality of floating vessels 1 is preferred.

The vessels 1 of this first exemplary embodiment comprise two hulls 10 interconnected by a connecting structure 11, one underwater hydrofoil (not visible as in this top view it is hidden by the connecting structure 11) for propelling the floating vessel. Each hull 10 comprises an underwater turbine 30 operatively connected to an electrical generator for producing electricity (not shown) and is slidably connected to a corresponding guide cable 40 which defines a path along which the vessels 1 are guided. As can be seen, the exemplary embodiment shown comprises two guide cables 40 arranged on opposite sides of the floating vessels 1, facing one another. In other embodiments a single guide cable 40 can suffice. Other embodiments can also comprise more than two guide cables 40. In this first exemplary embodiment, the guide cables 40 define a linear path.

In this first exemplary embodiment, the convoy of floating vessels 1 moves in a first advance direction along the path defined by the guide cables 40. Once the convoy of floating vessels 1 reaches the end of the path, which typically coincides with the end of the at least one guide cable 40, said convoy may reverse its operation and move following a second advance direction following the path defined by the guide cables 40, said second advance direction being opposite the first one.

In this first exemplary embodiment, the floating vessels 1 defining the convoy are interconnected by a cable 90. Said cable 90 can be a simple mechanical connection between different floating vessels 1 or can also be used to transmit electrical power, or any other energy vector, from one floating vessel 1 to another. Said cable 90 is optional and other embodiments may lack it. It is also possible that in embodiments having multiple floating vessels 1 such vessels are interconnected by a cable 90 in groups, for example, in a system having six floating vessels, there could be two independent groups of floating vessels 1, each of the three floating vessels 1 of a group being interconnected by a cable 90.

In embodiments of the present invention wherein one or more floating vessels 1 comprise accumulators for storing electricity or any other suitable energy vector (hydrogen, ammonia, etc.), said electricity or other energy vector may be discharged from the accumulator once the convoy reaches the end of the path and before reversing its operation in order to move following the second advance direction. In certain embodiments, at least one of the floating vessels 1 may comprise a connection 80 to continuously transmit power, or any other energy vector, to an electrical network, storage facility, etc. on shore or land.

In FIG. 1, the arrow labelled as Mr depicts the real tide, i.e., velocity of tide as seen from a fixed point, the arrow labelled as Mm depicts the tide due to the advance of the vessel 1 and the arrow labelled as Ma depicts the apparent tide impinging on the vessel 1 as a result of the vector sum of the real tide Mr and the tide due to the advance of the vessel Mm. This is typically represented with what is known as triangle of velocities, as depicted in FIG. 1.If a resting body is impinged by a fluid moving at a certain real speed (in vector and magnitude) from a reference system at rest, when said body is in motion, from its reference system the fluid will impinge on it with a higher relative speed (in vector and magnitude), as a result of the triangle of velocities formed by the real velocity, the forward velocity of the body and the resulting relative velocity, said relative velocity being the one that generates the different hydrodynamic or aerodynamic forces on the body.

If the body advances in a perpendicular direction to a fluid moving at a certain real speed, as the forward speed of the body increases, the relative velocity resulting from the triangle of velocities will be greater and greater, and will do so with a decreasing angle of incidence with respect to the forward axis of the body.

Therefore, when compared to known systems in the prior art wherein tidal turbines are stationary, the at least one underwater turbine 30 of the at least one vessel 1 of a system according to the present invention produces a greater power as the apparent speed of the tide Ma driving the at least underwater turbine 30 is greater than the real tide Mr that drives stationary tidal turbines. Energy production of a turbine is proportional to the fluid speed cubed, therefore, even small increments in the speed of the fluid driving a turbine can have notorious impact on the energy production of a turbine.

In the exemplary embodiment shown in FIG. 1 all vessels have a similar configuration (two hulls 10 connected by a connecting structure 11, each hull comprising one underwater turbine 30, etc., see above). However, in other embodiments comprising a plurality of floating vessels 1, some vessels 1, or even all of them, can be different than the rest of the convoy.

In this first exemplary embodiment, separation between each floating vessel 1 of the convoy is substantially similar. However, in other embodiments such separation may vary between different members of the plurality of floating vessels 1 forming the convoy. The separation between different members of the convoy of floating vessels 1 is preferably such that turbulences created by the preceding floating vessel 1 do not affect a certain floating vessel 1. This is illustrated in FIG. 1 by substantially straight dotted lines which represent tides, with a substantially laminar flow, and curved dotted lines which represent turbulent tides due to the interaction of tides with the hulls 10, underwater hydrofoil 20 and turbines 30 of each floating vessel 1. As can be seen, after a certain distance, turbulent tides due to their interaction with the corresponding floating vessel 1 become substantially laminar again.

For similar reasons, in embodiments of floating vessels comprising more than one hull 10 and/or more than one underwater hydrofoil 20 and/or more than one underwater turbine 30, such elements are preferably spaced apart so that their performance is not affected, or at least the impact on their performance is greatly reduced, by turbulences created by other elements of the same floating vessel 1 or other floating vessels 1.

The body of water in which the system of the present invention can be used is preferably a sea or an ocean, wherein tides are strong and long guide cables 40 can be placed. However, the system of the present invention can also be used in smaller bodies of water, such as lakes, etc. provided there are sufficient tides.

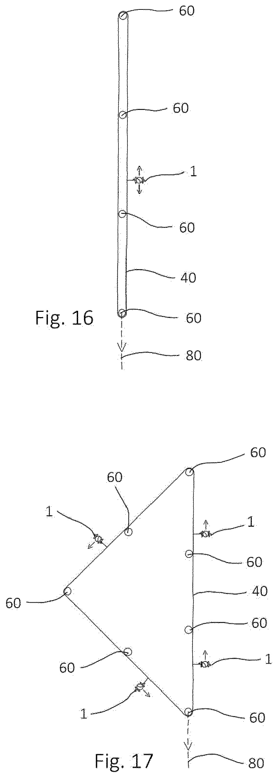

Other exemplary embodiments of systems according to the present invention can be seen in FIGS. 16 to 19.

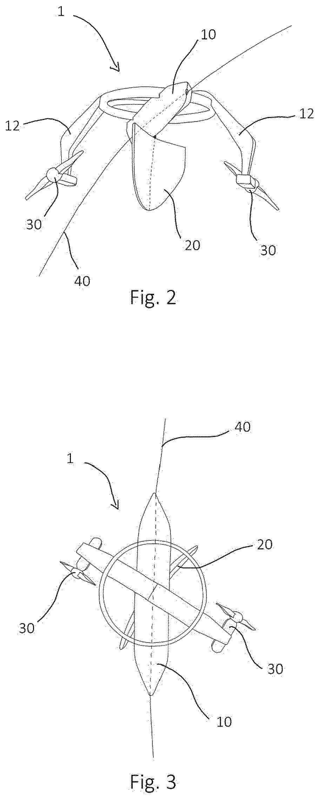

FIGS. 2 and 3 show a bottom perspective view and a top view, respectively, of a first exemplary embodiment of a floating vessel 1 of a system for producing electricity in a body of water according to the present invention. The vessel 1 of this first exemplary embodiment comprises a single hull 10 slidably connected to a single guide cable 40. Said hull 10 comprises a single underwater hydrofoil 20 configured for being submerged on the body of water and propelling the vessel 1. The vessel 1 of this first exemplary embodiment comprises two underwater turbines 30, each one arranged on a corresponding support structure 12 connected to the vessel 1 in an articulated manner, and, in particular, connected to the single hull 10. Said support structures 12 are movable from a deployed position in which the corresponding underwater turbines 30 are fully submerged in the body of water and a resting position in which at least part of the underwater turbine 30 projects above the water surface. Such configuration of the support structures 12 eases the maintenance of the underwater turbines 30 when they are in their resting position, among other benefits. However, in other embodiments such support structures 12 may have a fixed position, i.e., may not be pivotable. This is also applicable to the second, third and fourth exemplary embodiments of a floating vessel shown in FIGS. 3 to 11.

Said hull 10 further comprises an auxiliar structure, which in this exemplary embodiment is of a substantially circular shape, which function as a stop of the support structures 12 when they are in their deployed position.

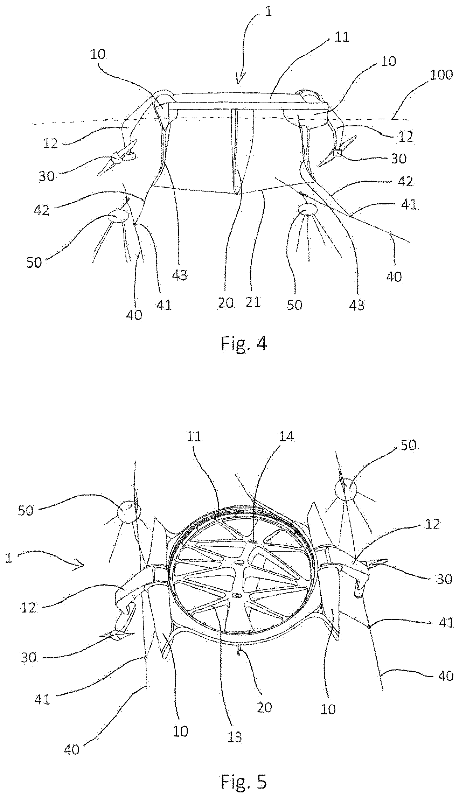

FIGS. 4 and 5 show a front view and a top perspective view, respectively, of a second exemplary embodiment of a floating vessel 1 of a system for producing electricity according to the present invention. The floating vessel 1 of this second exemplary embodiment comprises two hulls 10 interconnected by a connecting structure 11, which in this exemplary embodiment is placed above waterline 100 or water surface, which is depicted by dotted lines, in order to reduce the hydrodynamic drag of the vessel. However, in other embodiments said connecting structure 11 could also be at least partly submerged, in which case it should be preferably shaped to minimize its hydrodynamic drag.

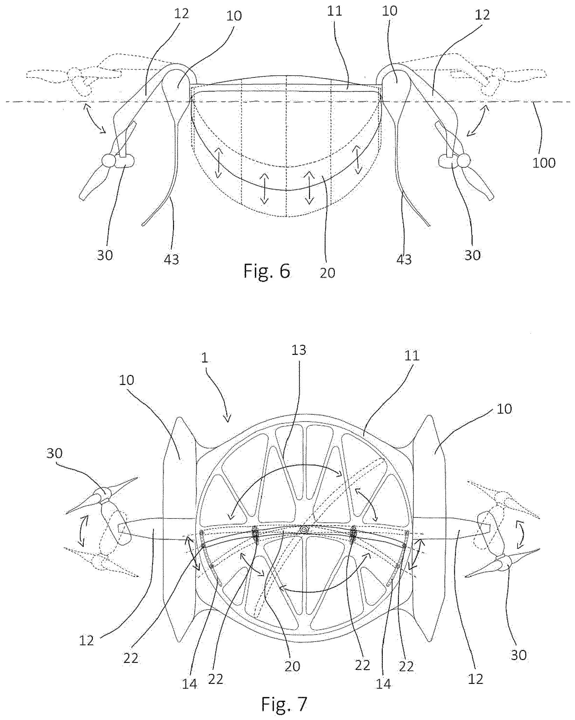

The connecting structure 11 of this second exemplary embodiment is of a substantially circular shape and comprises a plurality of reinforcing elements 13 which interconnect the underwater hydrofoil 20 for propelling the vessel 1 with the connecting structure 11. In particular, the reinforcing elements 13 shown comprise a plurality of slots 14, although only one could also suffice, that slidably house a corresponding protruding element 22 of the underwater hydrofoil 20 (see FIG. 7). Said reinforcing elements 13 may be fixed or may be rotatable, so that the angular position of the underwater hydrofoil can be adjusted. The vessel 1 comprised in the system object of the present invention can comprise other features that allow adjustment of the angular position of the underwater hydrofoil 20 for propelling the vessel 1.

In this second exemplary embodiment, each hull 10 comprises a corresponding support structure 12 which in turn comprises a corresponding underwater turbine 30, whose angular position can be adjusted. Each hull 10 further comprises an extension 43 which on the opposing end is attached to a bridle cable 42, which is in turn attached to a traveller 41 slidably connected to the corresponding guide cable 40. As can be seen, the system according to the present invention shown in FIGS. 4 and 5 comprises two guide cables 40 arranged on opposite sides of the vessel 1. In the system shown, the guide cable 40 is located spaced apart from the bed of the body of water at a depth that prevents other boats that may navigate or sail in said body of water from colliding with said guide cable 40. This depth can be, for example, 10 m, although deeper depths (for example 50 m) or shallower depths (for example 5 m), can also be used. It is also possible to place the guide cable on the water surface, although such arrangement should be preferably avoided as it implies a certain risk that other boats, animals, people, etc. can collide with it. The extensions 43 aid in connecting the vessel 1 with deep guide cables 40. Such extensions 43 are preferably shaped as to reduce its hydrodynamic drag. In order to maintain the guide cable 40 at a certain depth, the system shown comprises a mooring unit 50 for mooring the guide cable at the desired depth. In this exemplary embodiment, said mooring unit 50 comprises a plurality of buoys anchored to the bed of the body of water, which are arranged so that they float at a substantially uniform depth. Guide cables 40 are connected to corresponding buoys, so that guide cables 40 are maintained at a substantially uniform depth. In other embodiments, the depth at which the at least one guide cable 40 is placed may not be uniform. In other embodiments, the guide cable 40 can also be placed, at least in part, on the bed of the body of water.

The vessel 1 of this second exemplary embodiment further comprises a reinforcing element 21 of the underwater hydrofoil 20 which is attached to an end or tip of the underwater hydrofoil 20 and to another element of the vessel 1 which provide sufficient strength, in the present exemplary embodiment, the extensions 43. Said reinforcing element 21 prevents, or at least greatly reduces, bending of the tip or distal end of the underwater hydrofoil 20. Such bending could adversely affect the hydrodynamic properties of the underwater hydrofoil 20 and, therefore, should preferably be avoided, as it could adversely affect the propulsion of the vessel 1, and thereby the energy production of the underwater turbines 30.

FIG. 6 shows a front view of the second exemplary of a floating vessel 1 shown in FIGS. 4 and 5 wherein different positions or configurations of the underwater hydrofoil 20 and the support structures 12 are depicted. In particular, FIG. 6 depicts that the underwater hydrofoil 20 of the second exemplary embodiment of a vessel 1 according to the present invention is made of at least two parts joined together in an extensible and contractable manner so that the surface of the underwater hydrofoil 20 can be increased or reduced depending on the needs of the vessel 1 and/or of the system as a whole. In this exemplary embodiment, different parts of the underwater hydrofoil 20 for propelling the vessel 1 are slidably arranged and can move from an extended position to a retracted position, and vice versa.

FIG. 6 also depicts the deployed position of the support structure 12 wherein the underwater turbine 30 is fully submerged in the body of water, i.e., is completely placed below waterline 100 depicted in dotted line, and the resting position in which at least part of the underwater turbine 30 projects above the water surface of the body of water or simply above waterline 100. The deployed position could also be named as the operative position as it is the position in which the underwater turbines 30 operate in a nominal or optimal manner. The resting position eases the maintenance of the underwater turbine 30 as it can be at least partly accessed from above water, avoiding or greatly reducing underwater maintenance, which is difficult, costly and dangerous. The support structure 12 can also be placed in the resting position, for example, when the tides are two strong and could damage the turbine 12 and/or the support structure 12.

FIG. 7 shows a top view of the second exemplary embodiment of a vessel 1 according to the present invention depicting different possible angular positions of the underwater turbines 30 and of the underwater hydrofoil 20 for propelling the vessel 1. Moreover, FIG. 7 also depicts that the underwater hydrofoil 20 of this second exemplary embodiment can modify its shape and, in particular, can modify its radius of curvature, in order to modify its hydrodynamic properties.

As depicted by arrows and dotted lines, each underwater turbine 30 can rotate around an axis of rotation perpendicular to the longitudinal axis of the turbine 30 so that they can be oriented in order to maximize their energy production, for example. Generally speaking, the energy production of the at least one turbine 30 of a vessel 1 of a system according to the present invention is maximized when the turbine 30 is oriented so that apparent speed (Ma) of the tide, or apparent tide (see FIG. 1), drives it, as the energy production of a turbine is proportional to the fluid speed cubed.

As depicted by arrows, in this exemplary embodiment, the underwater hydrofoil 20 can rotate around its longitudinal axis by rotating the reinforcing elements 13 that connect the underwater hydrofoil 20 with the connecting structure 11. In embodiments where the reinforcing elements 13 are stationary, the underwater hydrofoil 20 can be rotated, for example, by rotatably connecting a shaft of the underwater hydrofoil with the reinforcing elements 13. Preferably, such shaft of the underwater hydrofoil 20 is colinear with its longitudinal axis and is rotatably attached to the centre of the connecting structure, although it could also be rotatably connected in an offset manner.

In order to be able to modify its radius of curvature and thereby modify its hydrodynamic properties and optimise the propulsion of the vessel 1, the underwater hydrofoil 20 of this second exemplary embodiment of a vessel 1 according to the present invention is made of at least two parts, and in this particular case, four parts, joined together in an articulated manner by an articulated connexion. In this exemplary embodiment, all four parts are covered by a single skin, so that the underwater hydrofoil 20 of this second exemplary embodiment has a single continuous surface. In the present exemplary embodiment, said articulated connexion is connected to a protruding element 22, which in the present case is in the form of a rod, which is housed in a slidably manner in a corresponding slot 14 in the reinforcing elements 13 (see FIG. 5). By sliding the protruding element 22 in the corresponding slot 14 the shape of the underwater hydrofoil 20 can be changed, thereby modifying its hydrodynamic properties.

By rotating and/or changing the shape of the underwater hydrofoil 20 it is possible to change and adapt its hydrodynamic properties, and in particular, its angle of attack and its lift coefficient.

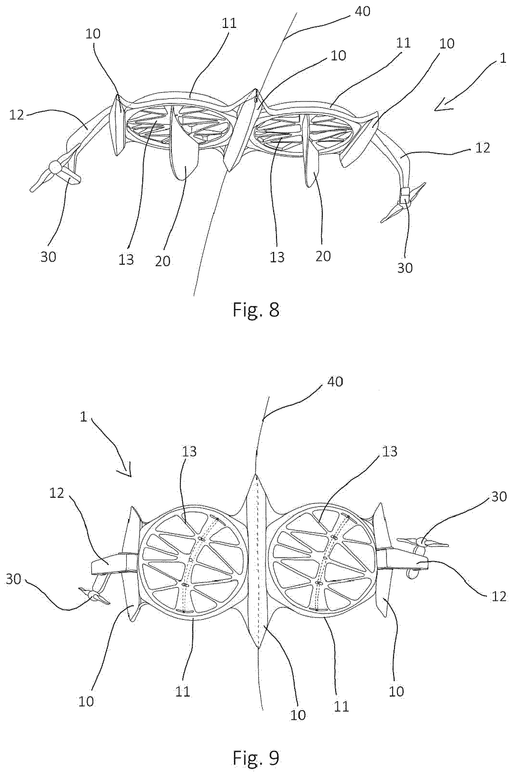

FIGS. 8 and 9 show a bottom perspective view and a top view, respectively, of a third exemplary embodiment of a floating vessel 1 of a system for producing electricity according to the present invention. A difference between this third exemplary embodiment and the first and second exemplary embodiments previously described is that the vessel 1 of this third exemplary embodiment comprises three hulls 10 and two underwater hydrofoils 20 for propelling the vessel 1.

Another difference between this third exemplary embodiment and the first and second exemplary embodiments described hereinabove is that in this third exemplary embodiment the central hull 10 slides along the guide cable 40 which goes through it. The orifices through which the guide cable 40 enters and/or leaves the hull 10 may comprise friction reduction elements in order to aid in the sliding of the vessel 1. In other similar embodiments, one of the lateral hulls 10 can be the one slidably connected to the guide cable 40. In case of multiple guide cables 40, multiple hulls 10 can be slidably connected to the corresponding guide cable 40.

Similar to the first and second exemplary embodiments previously described, the vessel 1 of this third exemplary embodiment also comprises a pair of articulated support structures 12, each one having a corresponding water turbine 30. However, other embodiments of a vessel 1 according to the present invention may lack such support structure 12 or said support structure 12 may have a fixed position, that is to say, may not be articulated.

In this third exemplary embodiment each underwater hydrofoil 20 can be adjusted independently in order to optimize the overall performance of the vessel 1. The adjustment of the underwater hydrofoil 20 can comprise its rotation or angular position, its length, its curvature, etc. (see, for example, FIGS. 6 and 7). In other embodiments, the adjustment of the underwater hydrofoil 20 depend on the features thereof, as for example, a solid single piece underwater hydrofoil 20 will not be able to adjust its length or its curvature. Although it does not allow such a fine adjustment of its hydrodynamic properties, a simpler underwater hydrofoil 20 has the advantage of reduced cost and reduced maintenance, among others.

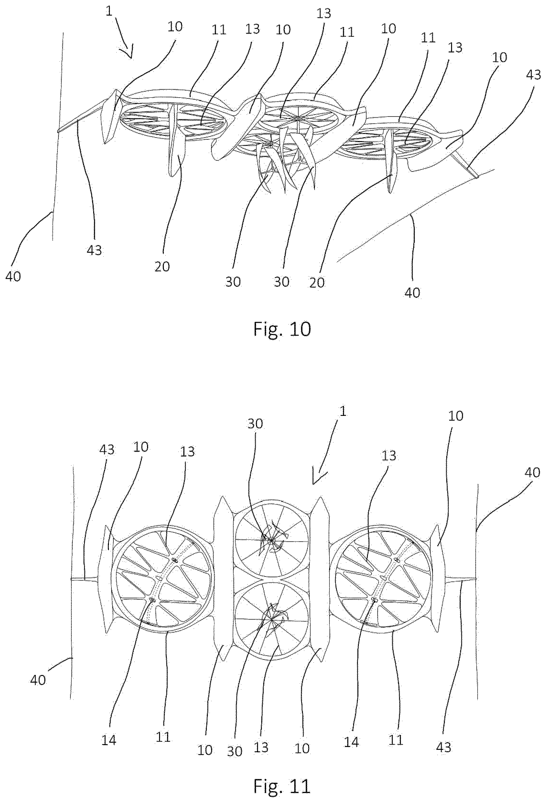

FIGS. 10 and 11 show a bottom perspective view and a top view, respectively, of a fourth exemplary embodiment of a floating vessel 1 of a system for producing electricity according to the present invention. This fourth exemplary embodiment of a vessel 1 comprises four hulls 10 interconnected by corresponding connecting structures 11 and two underwater hydrofoils 20 for propelling the vessel 1, each one being arranged in a corresponding side of the vessel 1. In its central region, the vessel 1 of this fourth exemplary embodiment comprises two vertical axis underwater turbines 30. This is one of the differences between this fourth exemplary embodiment and the previously described ones, as the first, second and third exemplary embodiments comprise horizontal axis underwater turbines 10. Each vertical axis turbine 30 of this fourth exemplary embodiment is supported by corresponding reinforcing elements 13 connected to the central connecting structure 11.

Similar to the second exemplary embodiment shown in FIGS. 4 and 5, this fourth exemplary embodiment is configured to be used in a system according to the present invention comprising two guide cables 40 arranged facing one another on opposite sides of the vessel 1. In this exemplary embodiment, the vessel 1 comprises two extensions 43 on opposite ends thereof slidably connected to the corresponding guide cable 40. However, other arrangements to connect the vessel 1 to the guide cable 40 could also be used, for example, the ones described in the context of FIGS. 2 to 9. In other embodiments, at least one of the extensions 43 can be firmly connected, i.e., not slidably, to a corresponding guide cable 40, as, for example, in the context of exemplary embodiments described in FIGS. 16 to 19.The fourth exemplary embodiment comprises two underwater hydrofoils 20 for propelling the vessel 1, as the third exemplary embodiment previously shown. Likewise, each underwater hydrofoil 20 can be adjust independently one another or both can be adjusted synchronously, i.e., the same adjustment takes place on both underwater hydrofoils 20 at the same time.

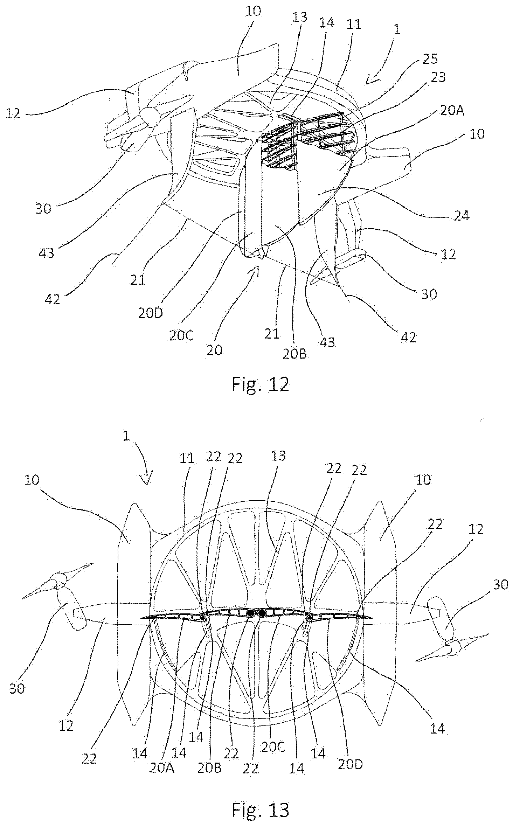

FIG. 12 shows a bottom perspective view of a fifth exemplary embodiment of a floating vessel 1 of a system for producing electricity according to the present invention. This fifth exemplary embodiment is similar to the second exemplary embodiment shown in FIS. 4 and 5, but the underwater hydrofoil 20 is different. In this fifth exemplary embodiment the underwater hydrofoil 20 comprises a group of four underwater hydrofoil segments 20A, 20B, 20C, 20D being configured to act or perform as a single underwater hydrofoil 20, each segment 20A, 20B, 20C, 20D being slidably connected to reinforcing elements 13 operatively connected to the connecting structure 11. In FIG. 12 the underwater hydrofoil segments 20A, 20B have been depicted, for illustrative purposes, with its skin 24 partially removed. However, it should be understood that in this fifth exemplary embodiment each underwater hydrofoil segment 20A, 20B, 20C, 20D is actually surrounded by its corresponding skin 24 which defines the external surface of the corresponding underwater hydrofoil segment 20A, 20B, 20C, 20D. In order to provide structural integrity, each underwater hydrofoil segment of this exemplary embodiment comprises a plurality of ribs 23 interconnected by a plurality of stringers 25. The aforementioned structure of the underwater hydrofoil segments 20A, 20B, 20C, 20D is substantially similar to the one of a wing of a plane. Although this structure of ribs 23, stringers 25 and skin 24 has been described in the context of the fifth exemplary embodiment, it can also be employed in underwater hydrofoils as the one described in the context of the first, second, third and fourth exemplary embodiments, i.e., this structure can also be employed in underwater hydrofoils 20 comprising a single continuous external surface.

Similarly to what has been described in the context of FIG. 7, in this fifth exemplary embodiment each underwater hydrofoil segment 20A, 20B, 20C, 20D comprises at least one protruding element 22 received in a slidable manner in a corresponding slot 14 in the reinforcing elements 13. Although a single protruding element 22 for each underwater hydrofoil segment 20A, 20B, 20C, 20D would suffice, in this exemplary embodiment each underwater hydrofoil segment 20A, 20B, 20C, 20D comprises two protruding elements 22, each one received in a slidable manner in a corresponding slot 14 in the reinforcing element 13. In particular, in this fifth exemplary embodiment, a first protruding element 22 is arranged at one end of the underwater hydrofoil segment 20A, 20B, 20C, 20D and a second protruding element 22 is arranged at the opposite end of the underwater hydrofoil segment 20A, 20B, 20C, 20D following a transversal direction. This arrangement with two protruding elements 22 for each underwater hydrofoil segment 20A, 20B, 20C, 20D provides an increased structural integrity and greater stiffness of each underwater hydrofoil segment 20A, 20B, 20C, 20D.

In order to further increase the structural integrity of the underwater hydrofoil 20, and in particular, of each of the central underwater hydrofoil segments 20B, 20C, the vessel 1 further comprise a corresponding reinforcing element 21 which connects the bottom end or tip of the central underwater hydrofoil segments 20B, 20C with another element of the vessel 1, which in the present case, is an extension 43, and in particular, with the lowermost tip of the corresponding extension 43. However, in other embodiments the reinforcing element 21 can be connected to other parts of the extension 43 or of the vessel 1. It is also possible that, in other embodiments, the vessel 1 comprises a reinforcing element 21 for each hydrofoil segment 20A, 20B, 20C, 20D.

As can be seen, similar to the second exemplary embodiment previously shown, the vessel 1 of this fifth exemplary embodiment also comprises two bridle cables 42 slidably connected to a corresponding guide cable 40 (not shown) and to a corresponding extension 43 of a corresponding hull 10.

FIGS. 13 to 15 show, in a top view, a first, a second and a third configuration, respectively, of the fifth exemplary embodiment of a vessel 1 of a system according to the present invention shown in FIG. 12. It should be noted that these different configurations are only for illustrative purposes and that the underwater hydrofoil segments 20A, 20B, 20C, 20D acting as a single underwater hydrofoil 20 of this fifth exemplary embodiment could achieve a greater number of different configurations, depending, for example, on tidal speed, propulsion needs of the vessel 1, etc.

The different configurations shown of the underwater hydrofoil segments 20A, 20B, 20C, 20D are achieved, in this exemplary embodiment, by sliding the protruding elements 22 of each underwater hydrofoil segment 20A, 20B, 20C, 20D along the corresponding slot 14 in the reinforcing elements 13. However, in other embodiments of a vessel 1 of a system according to the present invention, the underwater hydrofoils segments 20A, 20B, 20C, 20D may be connected to the vessel 1 in a different manner.

Although each underwater hydrofoil segment 20A, 20B, 20C, 20D can be regulated individually, in each configuration they are regulated or configured as to function as a single underwater hydrofoil 20.

In the first configuration, i.e., the one shown in FIG. 13, all underwater hydrofoil segments 20A, 20B, 20C, 20D are aligned substantially parallel to the direction of the fluid stream so that the underwater hydrofoil 20 defined by the underwater hydrofoil segments 20A, 20B, 20C, 20D has a lift coefficient close to zero. In this configuration the vessel 1 is heaving to so as to reduce, or even stop, the forward movement of the vessel 1. It may be desirable that the vessel 1 heavens to, at the end or in the middle of the path defined by the at least one guide cable 40, for example, in case of heavy storms, maintenance operations, transfer of energy stored in the vessel 1, etc.

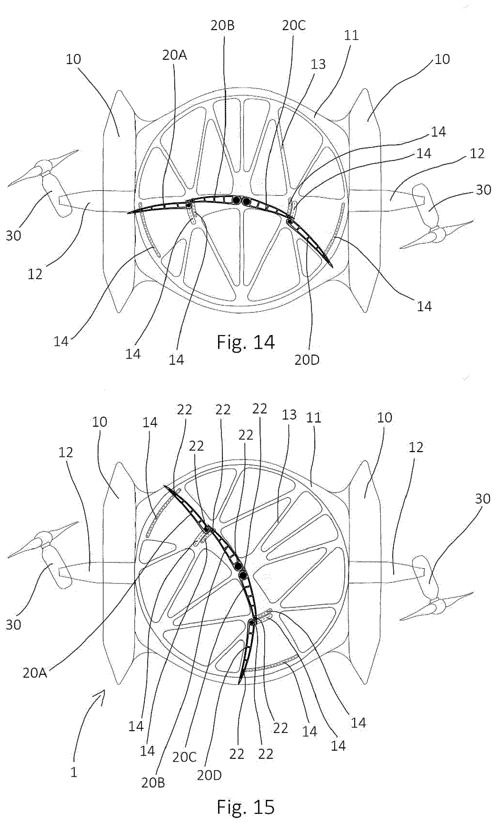

FIG. 14 shows a second configuration of the underwater hydrofoil 20 wherein the group of underwater hydrofoil segments 20A, 20B, 20C, 20D define an asymmetric foil profile. Departing from the first configuration shown in FIG. 13, this second configuration can be reached by moving the protruding elements 22 along the corresponding slots 14 present in the reinforcing elements 13, so that the lift/drag coefficient of the underwater hydrofoil 20 changes.

In this second configuration of the underwater hydrofoil 20 a channel effect can be produced in the gap between adjacent hydrofoil segments 20A, 20B, 20C, 20D so that the force generated by the underwater hydrofoil 20 is greater than the sum of the forces that each underwater hydrofoil segment 20A, 20B, 20C, 20D would generate independently.

The third configuration shown in FIG. 15 is reached by rotating, i.e., by changing the angular position, of the underwater hydrofoil 20 by rotating the reinforcing elements 13 relative to the connecting structure 11. By rotating the underwater hydrofoil 20 it is possible to change its angle of attack and, therefore, to change its hydrodynamic properties.

FIG. 16 shows a top schematic view of a second exemplary embodiment of a system for producing electricity according to the present invention. In this second exemplary embodiment, the path defined by the at least one guide cable 40 is a closed loop path and the system comprises four nodes 60 for shaping said closed looped path, although only two nodes 60, one at each opposite end of the loop, would suffice. Besides shaping the closed loop path, the nodes 60 also maintain the at least one guide cable 40 under a certain tension, as a loose guide cable 40 could hinder the performance of the system. In this second exemplary embodiment, the closed looped path defined by the at least one guide cable 40 is of a substantially elongated shape.

This secondary embodiment of a system according to the present invention further comprises an electrical connection 80 to an external network or external consumer at one of the ends of the elongated path defined by the at least one guide cable 40. In other embodiments, such electrical connection 80 can be placed at each end of the elongated path.

An advantage of this second exemplary embodiment is that the at least one floating vessel 1 can operate continuously as there is no need to stop at the end of the path and reverse the operation of the vessel 1 as in the first exemplary embodiment shown in FIG. 1. In this second exemplary embodiment, the at least one floating vessel 1 can operate clockwise or counterclockwise depending, for example, on the properties (speed, direction, etc.) of the tides in the body of water, e.g., sea or ocean.

Even if only one vessel 1 has been depicted in FIG. 16, it should be understood that in such embodiment can operate more than one vessel 1 and, in fact, more than one vessel 1 is preferred.

FIG. 17 shows a top schematic view of a third exemplary embodiment of a system for producing electricity according to the present invention. This third exemplary embodiment is substantially similar to the second exemplary embodiment shown in FIG. 16. Both exemplary embodiments differ, mainly, in the shape of the path defined by the at least one guide cable. In this third exemplary embodiment the closed looped path defined by the at least one guide cable 40 is of a substantially triangular shape, whereas in the second exemplary embodiment the closed looped path is substantially linearly elongated.

This third exemplary embodiment comprises a node 60 at each of the vertexes of the triangle and further comprises one or two additional nodes 60 at each of the sides of the triangular path defined by the at least one guide 40. The number and placement of the nodes 60, besides the desired shape of the closed looped path, may also depend on the number of vessels 1 in the system, the properties of the tides in the body of water, etc.

In this third exemplary embodiment, the vessels 1 can operate clockwise or counterclockwise depending on the needs.

As in FIG. 16, the dotted arrow in FIG. 17 represents an electrical connection 80 to an external network or consumer of the third exemplary embodiment of a system according to the present invention.

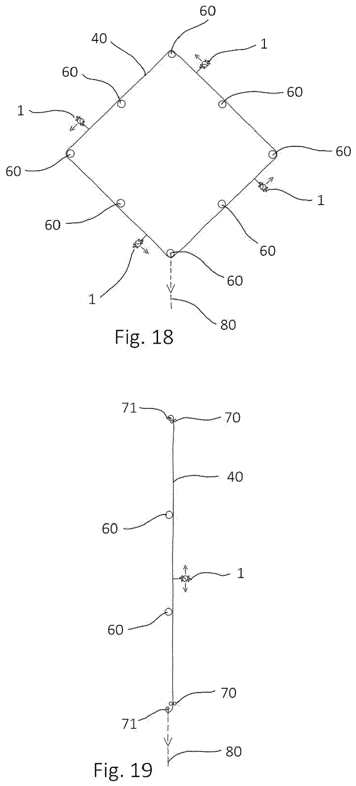

FIG. 18 shows a top schematic view of a second exemplary embodiment of a system for producing electricity according to the present invention. The system of this fourth exemplary embodiment is similar to the second and third exemplary embodiments shown in FIGS. 16 and 17, but wherein the at least one guide cable defines a closed looped path of a substantially squared shape.

Unless otherwise provided, what has been described in the context of FIGS. 16 and 17 is also applicable to the system of the fourth exemplary embodiment shown in FIG. 18.

In the second, third and fourth exemplary embodiments shown in FIS. 16 to 18, the vessel 1 is firmly connected to the at least one guide cable 40, so that the floating vessel 1 propelled by its at least one underwater hydrofoil 20 drives the at least one guide cable 40 along the closed looped path. In these exemplary embodiments, as in the first one shown in FIG. 1, the at least one guide cable 40 guides the at least one vessel 1 and compensates its drift, but it does not drive, propel, pull, etc. the at least one vessel 1.

FIG. 19 shows a top schematic view of a sixth exemplary embodiment of a system for producing electricity from a fluid stream in a body of water according to the present invention. In this sixth exemplary embodiment the path defined by the at least one guide cable 40 has a first and a second end defining a length of the path, and the at least one guide cable 40 has a length greater than the length of said path. The sixth exemplary embodiment also comprises a tensioning unit 70 for tensioning the at least one guide cable 40 at the first and second end of the path. In other embodiments, the system may comprise further tensioning units 70.

The system of this exemplary embodiment further comprises a winding unit 71 for winding and/or unwinding the at least one guide cable 40 extending from the corresponding first or second end of the path. Other embodiments may comprise a winding unit 71 at only one of the ends of the path or even lack such winding unit 71.

In this sixth exemplary embodiment, one of the winding units 71 comprises an electrical connection 80 to an external network or user. In other embodiments, both winding units 71 can comprise such electrical connection 80. It is also possible that some embodiments lack such electrical connection 80, for example, in embodiments wherein electricity produced by the at least one underwater turbine 30 is used to generate and store hydrogen or any other suitable vector, for example, ammonia. In the latter case, instead of an electrical connection 80 the system could comprise a pipe or similar to transfer the energy vector generated by the system of the present invention.

The exemplary embodiment shown in FIG. 19 further comprises nodes 60 for guiding the at least one cable. Such nodes 60 are optional and other embodiments may lack them.

In this sixth exemplary embodiment, the at least one floating vessel 1 is firmly connected to the at least one guide cable 40, so that said at least one floating vessel 1 propelled by its at least one underwater hydrofoil 20 drives the at least one guide cable 40 along the path.

Although in this sixth exemplary embodiment the path is rectilinear, in other similar embodiments the path can have a different shape, for example, can be L or U shaped, as long as the path is not a closed loop. Systems of the present invention wherein the path is a closed looped path have already been described in the context of FISG. 16 to 18.

In exemplary embodiments of a system according to the present invention shown in FIGS. 1 and 16 to 19, the at least one guide cable 40, besides guiding the at least one vessel 1 and compensating for the drift of the at least one vessel, could also be configured to transmit electricity generated by the at least one vessel 1, and in particular, by the at least one underwater turbine of each vessel 1.

Unless otherwise provided, features described in relation to a certain exemplary embodiment are also applicable to other embodiments of the present invention.

## Claims

1. A system for producing electricity from a fluid stream in a body of water comprising:
- at least one floating vessel (1) comprising:
∘ at least one hull (10);
∘ at least one foil for propelling the floating vessel;
∘ at least one underwater turbine (30) operatively connected to at least one electrical generator for producing electricity;
**characterized in that** the system further comprises at least one guide cable (40) connected to the at least one floating vessel (1) for guiding said at least one floating vessel (1) along a path;
and **in that** said at least one foil is an underwater hydrofoil (20) for propelling the at least one floating vessel (1) along the path defined by the at least one guide cable (40).

2. System, according to claim 1, **characterized in that** the at least one floating vessel (1) is slidably connected to at least one guide cable (40).

3. System, according to claim 2, **characterized in that** it comprises at least one traveller (41) slidably connected to the at least one guide cable (40), said traveller (41) being connected to the corresponding floating vessel (1).

4. System, according to claim 1, **characterized in that** the path defined by the at least one guide cable (40) is a closed loop path;
the system further comprising at least two nodes (60) for shaping said closed loop path; the at least one floating vessel (1) being firmly connected to said at least one guide cable (40), so that the at least one floating vessel (1) propelled by its at least one underwater hydrofoil (20) drives the at least one guide cable (40) along the closed loop path.

5. System, according to claim 1, **characterized in that** the path defined by the at least one guide cable (40) has a first and a second end defining a length of the path; the length of the at least one guide cable (40) being greater than said length of the path;
and **in that** the system further comprises a tensioning unit (70) at least at the first and second ends of the path for tensioning the at least one guide cable (40);
the at least one floating vessel (1) being firmly connected to said at least one guide cable (40), so that the at least one floating vessel (1) propelled by its at least one hydrofoil (20) drives the at least one guide cable (40) along the path.

6. System, according to claim 5, **characterized in that** the tensioning unit (70) comprises a winding unit (71) for winding and/or unwinding the at least one guide cable (40) extending from the corresponding first or second end of the path.

7. System, according to any one of the preceding claims, **characterized in that** the at least one floating vessel (1) comprises two or more hulls (10) interconnected by a connecting structure (11).

8. System, according to any one of the preceding claims, **characterized in that** the at least one underwater hydrofoil (20) is made of at least two parts joined together in an articulated manner by an articulated connexion.

9. System, according to any one of the preceding claims, **characterized in that** the at least one underwater hydrofoil (20) is made of at least two parts joined together in an extensible and contractable manner.

10. System, according to claim 7, **characterized in that** the at least one underwater hydrofoil (20) comprises a group of at least two underwater hydrofoil segments (20A, 20B, 20C, 20D), each segment (20A, 20B, 20C, 20D) being slidably connected to reinforcing elements (13) operatively connected to the connecting structure (11), said group being configured to act as a single underwater hydrofoil (20).

11. System, according to any one of the preceding claims, **characterized in that** it further comprises a mooring unit (50) for mooring said at least one guide cable (40).

12. System, according to any one of the preceding claims, **characterized in that** it comprises an electrical connection to an external electrical network or to an external consumer.

13. System, according to any one of the preceding claims, **characterized in that** it comprises a plurality of floating vessels (1) arranged in a spaced apart configuration for forming a convoy.

14. Method for producing electricity from a fluid stream in a body of water comprising the following steps:
- providing a system according to any one of claims 1 to 13;
- moving the at least one floating vessel (1) along the at least one guide cable (40) following a first advance direction; and
- generating electricity with the at least one underwater turbine (30) of the at least one floating vessel (1).

15. Method, according to claim 14, further comprising the step of adjusting the angular position of the at least one underwater hydrofoil (20 and/or adjusting the shape of the at least one underwater hydrofoil (20) and/or adjusting the angular position of the at least one turbine (30) of the at least one floating vessel (1).
